# FASCICULE DE BREVET EUROPEEN

(11) **EP 1 406 805 B1**
(45) Date de publication et mention de la délivrance du brevet: **18.01.2006**
(21) Numéro de dépôt: 02760376.0
(22) Date de dépôt: 02.07.2002
(51) Int. Cl.: B60T 17/00

(54) **DISPOSITIF DE TRAITEMENT D'AIR COMPRIME DESTINE A ETRE INSTALLE DANS UN VEHICULE INDUSTRIEL**
LUFTBEHANDLUNGSGERÄT, FÜR DRUCKLUFT, ZUR EINBAU DEINES INDUSTRIEFAHRZEUGES
COMPRESSED AIR TREATMENT DEVICE THAT IS DESIGNED TO BE INSTALLED IN AN INDUSTRIAL VEHICLE

(30) Priorité: 18.07.2001 FR 0109590
(43) Date de publication de la demande: 14.04.2004
(73) Titulaire: Renault Trucks, 69800 St Priest (FR)
(72) Inventeur: DUCHET, Bruno, F-69780 MIONS (FR); CARNEIRO ESTEVES, Armando, F-69300 CALUIRE (FR)
(74) Mandataire: Vuillermoz, Bruno
(86) Numéro de dépôt international: PCT/FR2002/002305
(87) Numéro de publication internationale: WO 2003/008250

(56) Documents cités:
- EP-A- 0 689 117
- EP-A- 0 816 142
- EP-A- 0 831 383
- EP-A- 0 864 476
- EP-A- 1 004 495
- WO-A-00/07863
- WO-A-96/34785
- US-A- 5 560 591

## Description

### Domaine technique

L'invention se rattache au domaine des composants électropneumatiques et notamment ceux utilisés dans les véhicules industriels tels que les camions ou analogues. Elle concerne plus spécifiquement un dispositif de traitement d'air comprimé qui combine à la fois l'alimentation du système de freinage principal ou frein de service, avec l'alimentation de divers autres systèmes utilisant l'air comprimé en tant que source d'énergie.

### Techniques antérieures

De façon générale, les véhicules industriels, et notamment les camions sont équipés d'un système de freinage utilisant de l'air comprimé. Cet air comprimé est produit par un compresseur pneumatique entraîné par le moteur thermique. Ce compresseur délivre de l'air comprimé qui est stocké dans un réservoir d'air destiné à l'alimentation du circuit de frein de service. De la sorte, lorsque le conducteur actionne la pédale de frein, l'air comprimé contenu dans le réservoir en question alimente le circuit pneumatique assurant le freinage du véhicule moteur.

La même disposition est utilisée pour assurer le freinage de service de la remorque, lorsque celle-ci est reliée au véhicule moteur. Un réservoir additionnel, dédié au circuit de freinage de service de la remorque est également alimenté par le compresseur.

Plus précisément, l'acheminement de l'air comprimé produit par le compresseur à destination des réservoirs s'effectue par l'intermédiaire d'un dispositif électropneumatique. Ce dispositif, relié à la sortie du compresseur, traite l'air ainsi produit pour le délivrer de façon optimale aux réservoirs reliés au circuit de freinage de service.

Ce dispositif de traitement délivre également de l'air comprimé à destination d'autres systèmes assurant des fonctions diverses à l'intérieur du véhicule.

On peut notamment citer le système de frein de parc, qui permet l'immobilisation du véhicule lorsque celui-ci est arrêté, par un blocage mécanique des roues. Ce frein de parc est desserré par un actionneur lorsque ce dernier est alimenté en air comprimé avec une pression appropriée. Sur les véhicules existants, le dispositif de traitement d'air situé en sortie du compresseur pneumatique délivre donc une pression d'alimentation qui est acheminée, via des canalisations dédiées, jusqu'à proximité des actionneurs agissant pour le desserrage du frein de parc.

Plus précisément, ces canalisations alimentent des composants pneumatiques, tels que des robinets et valves notamment, qui délivrent une pression adéquate à l'actionneur. La commande de ces robinets se fait généralement manuellement par le chauffeur.

Ainsi donc, le dispositif de traitement d'air situé en sortie du compresseur possède une sortie d'air dédiée à l'alimentation du circuit de frein de parc du véhicule moteur.

Des exemples de tels dispositifs de traitement sont notamment décrits dans les documents EP 0 689 117, EP 1 004 495, WO 96/34785, EP 0 831 383, EP 0 864 476, et WO 00/07863.

De tels dispositifs comprennent également des sorties d'air comprimé supplémentaires, destinées à alimenter d'autres systèmes fonctionnant à partir d'air comprimé.

On peut par exemple citer les dispositifs de suspension pneumatique des essieux. A cet effet, le dispositif de traitement de l'air situé en sortie du compresseur comporte une sortie d'air qui alimente un ensemble d'électrovalves disposées à proximité des essieux suspendus pneumatiquement. La commande de ces électrovalves se fait à partir d'informations issues de capteurs situés à proximité de l'essieu suspendu.

Un capteur d'altitude mesure la différence de hauteur entre le châssis du véhicule et l'essieu considéré. Ce capteur délivre une information qui est traitée pour la commande des électrovalves alimentant les coussins pneumatiques de suspension, à partir de la pression délivrée par le dispositif de traitement d'air relié au compresseur.

La même disposition est également utilisée pour la gestion du frein de parc monté sur la remorque.

Le même genre d'architecture est également utilisée pour différents autres équipements auxiliaires parmi lesquels on peut notamment citer les prises de mouvements, ou bien encore des systèmes de blocage de différentiels.

On conçoit que les architectures existantes présentent l'inconvénient d'une implantation localisée des différents composants utilisés pour chacune des fonctions décrites ci-avant. La dissémination des différents composants ainsi que la multiplication des connections pneumatiques et notamment pour la liaison entre le châssis et la cabine du véhicule moteur, génèrent de nombreux risques de fuite et de faux contacts ainsi que des problèmes d'installation et de maintenance.

L'un des problèmes que se propose de résoudre l'invention est celui de la complexité du circuit pneumatique et de son circuit de commande.

### Exposé de l'invention

L'invention concerne donc un dispositif de traitement d'air comprimé, destiné à être installé dans un véhicule industriel. Un tel véhicule se compose généralement d'un véhicule moteur qui est apte à tracter une remorque. Le dispositif de traitement d'air comprend de façon connue :
- une entrée d'air en provenance d'une source d'air comprimé ;
- au moins une sortie d'air, reliée à un réservoir destiné à l'alimentation du système de frein de service ;
- un ensemble de composants électropneumatiques assurant la distribution d'air comprimé en provenance de la source d'air comprimé, à destination du ou des réservoirs ;
- une unité de contrôle commande électronique, apte à commander ledit ensemble de composants électropneumatiques, cette unité de contrôle étant reliée à un bus de communication informatique.

Conformément à l'invention, ce dispositif se caractérise en ce qu'il comporte également :
une sortie d'air supplémentaire, destinée à l'alimentation du ou des actionneurs du système de frein de parc du véhicule moteur ;
un ensemble supplémentaire de composants électropneumatiques associés à la sortie d'air supplémentaire ;
des moyens de commande, intégrés à l'unité de contrôle commande électronique, aptes à commander l'ensemble supplémentaire de composants électropneumatiques, en fonction d'informations issues du bus de communication informatique et/ou de capteurs reliés directement à l'unité de contrôle commande.

Autrement dit, la commande du frein de parc s'effectue directement par le dispositif de traitement d'air situé en sortie du compresseur, et non pas par un ensemble fonctionnel spécifique qui serait éclaté en plusieurs endroits du véhicule. Par commande du frein de parc, on entend non seulement l'alimentation des actionneurs avec une pression d'air comprimé, mais également la prise en compte d'informations spécifiques autorisant ou non le desserrage du frein de parc, en fonction de multiples informations en provenance notamment de la cabine du véhicule.

Ainsi, les différents composants électropneumatiques tels que les électrovalves qui alimentent l'actionneur du frein de parc, sont intégrés dans le dispositif de traitement d'air situé en sortie du compresseur, et ne sont plus, comme dans l'art antérieur, dispersés sur le véhicule.

Un des aspects de l'invention consiste donc, d'une part à rassembler au sein du même dispositif de traitement d'air les différents composants électropneumatiques responsables du desserrage du frein de parc et d'autre part, à intégrer à l'intérieur de l'unité de contrôle commande la logique de la commande de ces composants.

On améliore ainsi la fiabilité de l'ensemble, puisqu'il n'est plus nécessaire d'acheminer en différents points du véhicule et notamment en cabine, les informations pneumatiques pour la commande des valves responsables du freinage de stationnement. Les opérations de maintenance sont donc facilitées, de même que les possibilités de réaliser des diagnostics de façon automatisée, par une gestion globale de l'unité de contrôle commande, qui assure la commande de ce frein de parc.

Selon une autre caractéristique de l'invention, la sortie d'air supplémentaire, et l'ensemble de composants électropneumatiques associés, peuvent être disposés dans un élément rapporté sur le corps du dispositif. Autrement dit, la sortie d'air supplémentaire, alimentant les actionneurs du système de frein de parc est intégrée à l'intérieur d'une tranche particulière qui est flasquée sur le corps principal du dispositif de traitement d'air. Cette architecture s'avère particulièrement avantageuse puisqu'elle permet de construire le dispositif de traitement d'air de façon modulaire, avec la possibilité notamment de ne remplacer que cette tranche lorsqu'elle devient défectueuse, ou bien encore d'adapter sur un corps commun différentes tranches configurées pour alimenter différents types d'actionneurs du système de frein de parc.

Selon une autre caractéristique de l'invention, le dispositif de traitement d'air peut également être adapté pour commander un système de suspension pneumatique. Dans ce cas, le dispositif de traitement d'air comprend également :
- au moins une sortie d'air supplémentaire, destinée à l'alimentation du ou des actionneurs du système de suspension pneumatique d'un essieu ;
- un ensemble supplémentaire d'organes électropneumatiques, associé à la ou les sorties d'air supplémentaires ;
- des moyens de commande intégrés dans l'unité de contrôle commande électronique, aptes à commander l'ensemble supplémentaire d'organes électropneumatiques en fonction d'informations issues du bus de communication informatique.

En d'autres termes, le dispositif de traitement d'air relié au compresseur comporte des électrovalves qui alimentent directement les coussins de suspension pneumatique en délivrant la pression et le débit appropriés pour le fonctionnement optimal de chacun de ces coussins.

La commande de ces électrovalves s'effectue à partir notamment des informations transitant sur le bus de communication informatique et/ou provenant de capteurs dédiés à la fonction, notamment un ou plusieurs capteurs d'altitude, mesurant la différence de hauteur entre le châssis du véhicule et un ou plusieurs points de l'essieu suspendu pneumatiquement.

De la sorte, l'information d'altitude est acheminée depuis la proximité de l'essieu jusqu'à l'unité de contrôle commande électronique. C'est cette dernière qui détermine alors le débit et la pression qu'il est nécessaire d'envoyer aux coussins de suspension pneumatique et qui commande alors les électrovalves appropriées, intégrées dans le dispositif de traitement d'air caractéristique de l'invention.

De cette manière, les composants électropneumatiques sont rassemblés en un lieu unique à l'intérieur du dispositif de traitement d'air relié au compresseur, ce qui facilite les opérations de maintenance, et uniformise la logique de contrôle commande.

Cette architecture peut être déclinée pour s'adapter aux très nombreux cas de figures en ce qui concerne le ou les circuits de suspension pneumatique. En effet, le véhicule peut comporter un ou plusieurs essieux pneumatiquement suspendus. Sur chaque essieu, les différents coussins pneumatiques peuvent être alimentés par une même source de pression ou bien par deux sources de pression différentes. Aux coussins assurant la suspension pneumatique proprement dite, peuvent être adjoints un ou des coussins supplémentaires assurant le relevage d'un essieu.

Ainsi, le dispositif de traitement d'air conforme à l'invention comporte le nombre de sorties appropriées pour la commande de l'ensemble des coussins de suspension présents sur le véhicule.

Du fait de l'intégration dans un même dispositif de l'ensemble des commandes des différents composants électropneumatiques, on améliore la supervision de l'ensemble du système de suspension pneumatique et on facilite les opérations de diagnostics et de maintenance.

Selon une autre caractéristique de l'invention, la ou les sorties d'air supplémentaire destinées à l'alimentation du système de suspensions pneumatiques, ainsi que l'ensemble des organes pneumatiques associés, sont rassemblés dans un ou plusieurs éléments flasqués rapportés sur le corps du dispositif du traitement d'air.

Il est ainsi possible de moduler l'architecture du dispositif de traitement d'air en fonction du schéma de suspension pneumatique du véhicule, en associant un ou plusieurs modules comportant chacun des sorties d'alimentation des coussins pneumatiques.

Avantageusement en pratique, les sorties d'air destinées à l'alimentation du système de suspension pneumatique attachées à un essieu peuvent être rassemblées dans le même élément flasqué sur le corps du dispositif. Autrement dit, le dispositif de traitement d'air peut comprcndre plusieurs tranches rapportées sur le corps principal, et responsables chacune de l'alimentation des coussins pneumatiques de suspension d'un essieu particulier.

Selon une autre caractéristique de l'invention, le dispositif de traitement d'air peut être amélioré pour assurer le fonctionnement de divers autres systèmes utilisant de l'air comprimé. Dans ce cas, le dispositif comprend alors au moins une sortie d'air complémentaire, destinée à l'alimentation du ou des actionneurs pneumatiques d'un système auxiliaire tel que notamment un système de blocage de différentiel, ou bien encore un système de prise de mouvements ou tout autre système nécessitant l'emploi d'énergie pneumatique.

Ce dispositif comprend également un ensemble complémentaire d'organes électropneumatiques associé à ces sorties d'air complémentaires. Les moyens de commande intégrés dans l'unité de contrôle commande électronique sont aptes à commander cet ensemble complémentaire d'organes électropneumatiques, en fonction d'informations transitant sur le bus de communication informatique et/ou provenant de capteurs dédiés aux différentes fonctions.

Selon une autre caractéristique de l'invention, le dispositif peut comporter également des moyens pour assurer une déshumidification de l'air en provenance de la source d'air comprimé. Ces moyens de déshumidification peuvent par exemple inclure des cartouches amovibles par rapport au corps du dispositif de traitement d'air.

Selon une autre caractéristique de l'invention, le dispositif de traitement peut comporter également un ou plusieurs éléments supplémentaires, rapportés sur le corps du dispositif. Chacun de ces éléments peut présenter un ou plusieurs contacts électriques aptes à être incorporés dans un circuit de commande électrique.

Ces contacts de relais sont commandés par l'unité de contrôle commande, en fonction d'informations issues du bus de communication informatique et/ou de capteurs dédiés. Grâce à ces contacts électriques, il est ainsi possible d'assurer la commande de systèmes fonctionnant électriquement. On peut citer à titre d'exemple le pilotage de système de blocage de différentiel, qui peut se réaliser électriquement, ou bien encore les systèmes de prise de mouvements, dont la mise en action peut se faire dans certains cas, uniquement par énergie électrique.

On peut également citer les systèmes de frein de parc dont les actionneurs sont mis en oeuvre de façon électrique, et non pas de façon pneumatique. Ainsi, la gestion de ce frein de parc, que ce soit sur le véhicule moteur ou sur la remorque, est réalisée par l'unité de contrôle commande monté sur le dispositif de traitement d'air. Cette unité de contrôle commande pilote les contacts électriques inclus dans le module approprié, ce qui permet ainsi l'alimentation ou non de l'actionneur électrique du frein de parc.

### Description sommaire des figures

La manière de réaliser l'invention ainsi que les avantages qui en découlent ressortiront bien de la description du mode de réalisation qui suit, donné à titre d'exemple non limitatif, à l'appui des figures annexées, dans lesquelles :
La figure 1 est une vue en perspective sommaire d'un dispositif de traitement d'air conforme à l'invention,

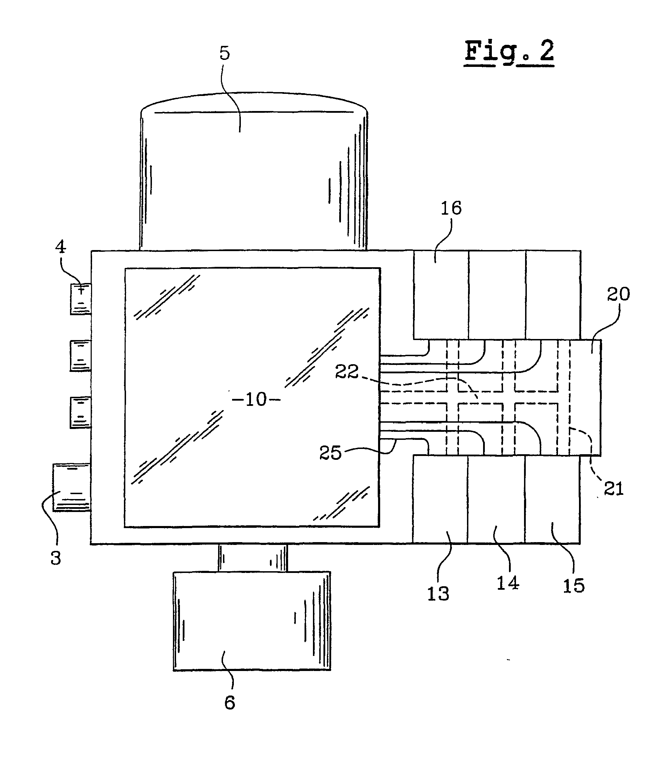

La figure 2 est une vue de face du dispositif de la figure 1.
La figure 3 est un schéma fonctionnel simplifié montrant le fonctionnement général du dispositif conforme à l'invention.

### Manière de réaliser l'invention

Comme déjà évoqué, l'invention concerne un dispositif de traitement d'air destiné à équiper des véhicules industriels tels que des camions notamment.

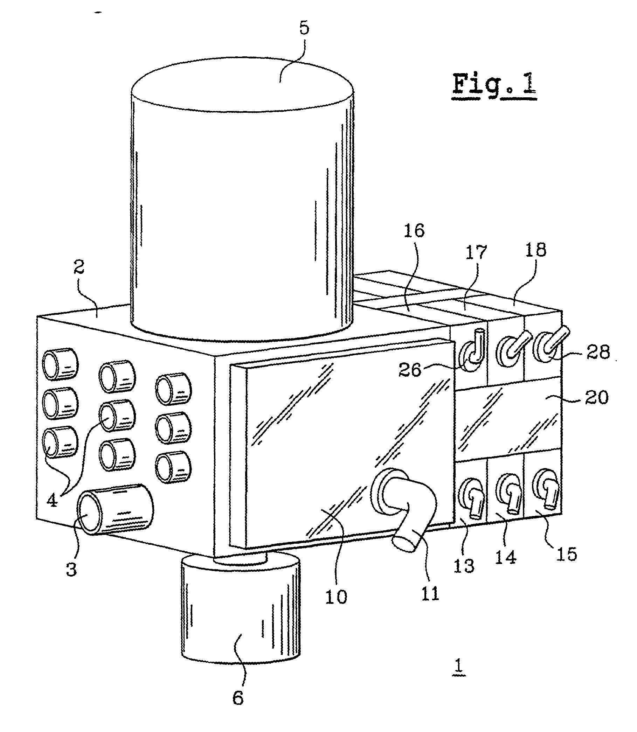

Dans une forme de réalisation particulière, ce dispositif se présente comme illustré à la figure 1. Ainsi, de façon générale, le dispositif de traitement d'air (1) comprend un corps principal (2) équipé d'une entrée d'air (3) qui est destinée à être reliée au compresseur, lui-même entraîné par le moteur thermique. Le corps (2) comprend également une pluralité de sorties d'air (4) destinées à alimenter notamment les circuits de freinage de service avant et arrière du véhicule moteur, ainsi que certains autres dispositifs fonctionnant à air comprimé tel que par exemple les systèmes d'assistance d'embrayage sur les boîtes de vitesse automatiques.

Le nombre de sorties d'air (4) illustré à la figure 1 est donné à titre d'exemple, étant entendu que l'invention couvre des variantes dans lesquelles le nombre de sortie est inférieur ou supérieur au nombre illustré.

Le corps (2) reçoit également une cartouche de déshumificateur d'air (5) qui permet d'éliminer une partie de l'humidité de l'air en provenance du compresseur. Cette cartouche (5) peut être remplacée par d'autres dispositifs équivalents, utilisant notamment des membranes, et qui peuvent éventuellement être directement intégrées dans le corps (2) du dispositif de traitement d'air. Sous sa face inférieure, le corps (2) reçoit un silencieux d'échappement (6), sans influence particulière sur les caractéristiques essentielles de l'invention.

Sur sa face avant, le corps (2) reçoit une unité de contrôle commande (10) qui assure comme décrit plus loin, la commande des différents composants électropneumatiques compris dans le dispositif. Cette unité de contrôle commande (10) est équipée d'un connecteur (11) assurant entre autres la liaison avec un bus de communication informatique, permettant la communication avec divers organes montés sur le véhicule, et notamment les organes de commande et de visualisation présents dans la cabine du véhicule.

Sur la face opposée à l'entrée d'air (3), le corps du dispositif de traitement comprend une pluralité de modules (13-18) qui sont rapportés sur le corps (2) du dispositif, et plus précisément en dessus et en dessous d'une portion intermédiaire (20) reliée à une face latérale du corps (2). Plus précisément, ces différents modules (13-18) peuvent être en nombre variable, en fonction de la configuration du circuit pneumatique du véhicule, et du nombre d'actionneurs pneumatiques à alimenter.

Conformément à l'invention, certains de ces modules (13-16) incluent des organes électropneumatiques, et typiquement des électrovalves. Certains autres de ces modules (17, 18) sont équipés de composants électromécaniques et/ou électroniques, typiquement des relais. L'alimentation en air comprimé de ces différents modules (13-16) se fait par l'intermédiaire de tubulures (21, 22) creusées à l'intérieur de la portion intermédiaire (20). Ces tubulures (21, 22) cheminent à l'intérieur de la portion intermédiaire (20), et débouchent à des endroits appropriés de manière à recevoir les ouvertures correspondantes réalisées dans les modules pneumatiques.

Lorsque des emplacements susceptibles d'accueillir des modules ne sont pas occupés, ces tubulures creusées dans la portion intermédiaire sont alors bouchées avec des organes appropriés, pour éviter toute fuite d'air.

De la même manière, l'alimentation électrique des différents modules, notamment l'alimentation des électrovalves et des commandes de relais, se fait par l'intermédiaire de faisceaux électriques (25) qui cheminent à l'intérieur de la portion intermédiaire et débouchent sur les faces en regard des modules. Une connectique appropriée permet d'acheminer les signaux électriques à l'intérieur des modules pour la commande des organes électropneumatiques, électromécaniques ou électroniques. Ces faisceaux électriques (25) permettent donc d'acheminer les différents signaux de commande depuis l'unité de contrôle commande (10) jusqu'aux différents modules (13-18). Ce faisceau peut par exemple être réalisé par un circuit imprimé incorporé à l'intérieur de la portion intermédiaire (20). Des organes de connectique sont alors mis en place pour relier les pistes de ce circuit imprimé aux faces supérieure et inférieure de la portion intermédiaire.

Chaque module électropneumatique comporte une sortie d'air constituée d'un connecteur pneumatique (26) relié à la sortie de l'électrovalve contenue dans le module (16). De la même manière, chaque module électromécanique comporte un connecteur électrique (28) permettant la sortie des contacts électriques du ou des relais contenus dans le module électromécanique (18).

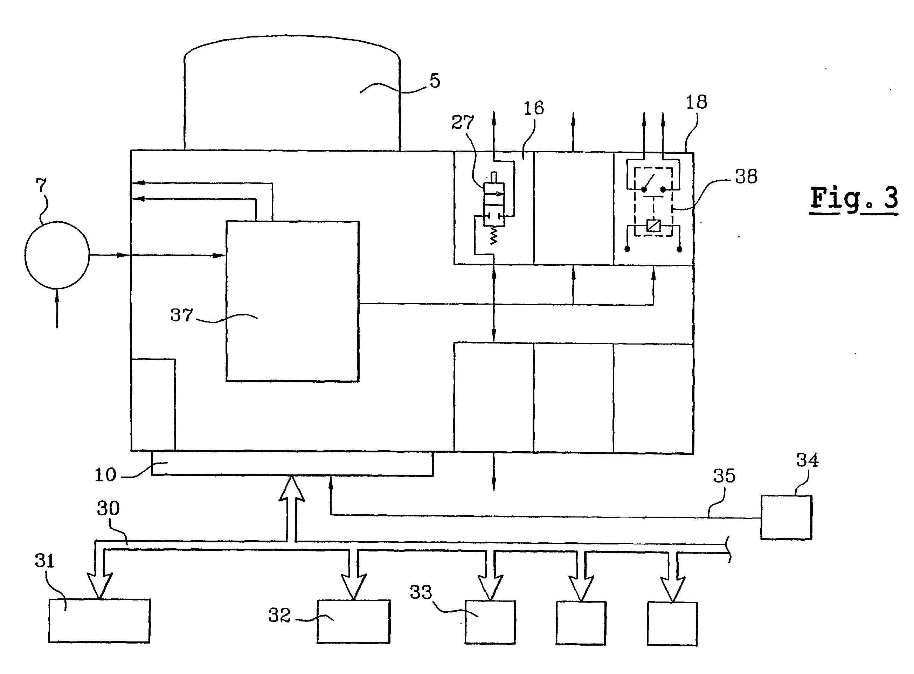

Comme illustré à la figure 3, l'unité de contrôle commande électronique (10), est reliée par l'intermédiaire du connecteur (11) à un bus de communication informatique (30) qui équipe le véhicule. Ce bus (30) peut notamment être relié à une unité électronique (31) située dans la cabine, et elle-même interfacée avec les différents interrupteurs ou potentiomètres sur lesquels le conducteur agit, par l'intermédiaire de leviers, de boutons poussoirs, de commutateurs ou autre pédale.

Ce bus de communication informatique (30) est également relié à l'unité de contrôle (32) qui assure l'affichage sur le tableau de bord de la cabine. Cette unité de commande (32) assure donc notamment l'affichage des différents voyants de signalisation sur l'état de fonctionnement des organes fonctionnels du véhicule et des éventuels messages des défaillances ou de configuration.

Ce bus de communication (30) peut également être interfacé avec d'autres organes ou systèmes présents sur le véhicule. Il peut par exemple s'agir d'un dispositif (33) assurant la prise de contrôle à distance du système de suspension pneumatique, ou bien de divers systèmes distincts du dispositif de traitement d'air, mais partageant avec celui-ci des informations de même nature, issues de capteurs eux-mêmes reliés à l'un de ces systèmes. II. peut par exemple s'agir d'informations de vitesses des roues du véhicule en provenance des capteurs reliés au dispositif de régulation électronique du freinage de service.

Plus précisément, et en référence à la figure 3, le coeur (37) du corps (2) du dispositif de traitement d'air comprend des organes électropneumatiques connus, et qui ne seront pas décrits plus loin en détail.

Ces organes assurent de façon générale la régulation de la pression délivrée par le compresseur (7), avec une éventuelle mise à l'échappement lorsque la consommation d'air est insuffisante, voire même une interaction avec le compresseur lui-même par ouverture de ses clapets d'admission et d'échappement.

Ces organes assurent également une distribution de l'air produit, à destination des réservoirs des circuits de freinage de service avant et arrière du véhicule moteur, ainsi que du réservoir du circuit de freinage de service de l'éventuelle remorque. Cet air transite dès sa sortie du compresseur par un dessiccateur dont la partie essentielle est formée par la cartouche (5) illustrée aux figures.

Conformément à l'invention, le dispositif de traitement d'air assure la gestion du frein de parc du véhicule moteur. Plus précisément, un des modules électropneumatiques (16) est dédié à l'alimentation du frein de parc du véhicule moteur. Ce module (16) délivre une pression qui agit sur un actionneur qui s'oppose au serrage du frein de parc. C'est en présence de cette pression que le frein de parc est desserré. Autrement dit, en l'absence de cette pression, le frein de parc ne peut être desserré. La pression ainsi délivrée par ce module (16) l'est par l'intermédiaire d'une électrovalve (27) qui est commandée en fonction de différentes informations traitées par l'unité de contrôle commande (10).

Différents traitements sur ces informations peuvent être réalisés selon des modes de sécurité particuliers. Ainsi, l'autorisation de desserrage du frein de parc peut être déterminée en fonction de l'ordre donné via le manipulateur actionné par le conducteur, et une mesure de la pression dans le réservoir du circuit de frein de service. Cette vérification de pression permet d'éviter le desserrage du frein de parc alors que le frein de service n'est pas encore opérationnel, car la pression dans le circuit de freinage de service ne serait pas encore suffisante. L'unité de contrôle commande (10) assure donc la vérification de ces différentes conditions et pilote l'électrovalve en conséquence.

Selon un autre type de gestion du frein de parc, notamment en vigueur dans les pays du Nord de l'Europe, il est également contrôlé que le chauffeur est présent dans la cabine pour autoriser le desserrage du frein de parc. La détection de la présence du chauffeur peut se faire de différentes manières, soit en détectant la présence de ce dernier avec un capteur présent sous son siège, ou bien encore en détectant l'actionnement par le conducteur d'une pédale ou d'un levier particulier. C'est en combinant ces différentes conditions que l'unité de contrôle commande électronique pilote l'électrovalve du module assurant le desserrage du frein de parc.

D'autres fonctions peuvent également être assurées en relation avec le frein de parc, grâce à l'intégration de sa commande dans le dispositif de traitement d'air. Il peut par exemple s'agir d'un enclenchement automatique du frein de parc lorsque le conducteur coupe le contact dans sa cabine. Il est également possible, par exemple en utilisant un capteur d'inclinaison, d'assurer une transition automatique du frein de service vers le frein de parc lors des arrêts en côte, en utilisant également certaines informations (vitesse du véhicule, ....) qui transitent sur le bus de communication informatique.

Sur certains types de véhicules, il peut s'avérer avantageux d'utiliser un actionneur associé à certaines fonctions qui soit commandable électriquement. L'alimentation de cet actionneur particulier peut se faire par l'intermédiaire d'un module électromécanique ou électronique (17, 18) monté sur le dispositif de traitement d'air. Dans ce cas, le module peut notamment contenir un relais (38) dont un contact est inséré dans le circuit d'alimentation de cet actionneur particulier. La commande appropriée de ce relais (38) assure l'alimentation de ce circuit, lorsque celle-ci est autorisée par l'unité de contrôle commande électronique (10).

Selon une autre caractéristique de l'invention, un ou plusieurs modules (13-18) du dispositif de traitement d'air sont dédiés à la commande du système de suspension pneumatique. De façon générale, les systèmes de suspension pneumatique comprennent un (ou plusieurs) coussins pneumatiques qui sontalimentés par des pressions et débits appropriés, eux-même délivrés par des électrovalves. Chaque électrovalve est alimentée en fonction de la consigne d'altitude correspondant à la distance souhaitée séparant le châssis de l'essieu suspendu. L'électrovalve est donc commandée en fonction de cette consigne et de l'information issue du capteur d'altitude (34) présent au niveau de l'essieu considéré. Cette information peut transiter par le bus informatique de communication, ou bien, plus généralement, par une liaison filaire spécifique (35). Ce capteur d'altitude peut également être associé à un capteur indiquant la pression à l'intérieur du coussin pneumatique pour permettre un fonctionnement optimal ainsi que des fonctionnalités complémentaires, telles que la mesure de la charge sur l'essieu.

Le nombre de modules dédiés à l'alimentation du système de suspension peut être variable, en fonction de l'architecture de suspension choisie. Ainsi, selon qu'il s'agit d'un essieu situé à l'aplomb de l'accrochage de remorque ou d'un essieu situé à un autre endroit, les coussins présents sur l'essieu peuvent être alimentés soit en parallèle soit de façon indépendante. Les coussins de suspension peuvent également être associés à un coussin de relevage permettant de soulever l'essieu et de le rapprocher du châssis. Cette reconfiguration peut intervenir en fonction de la comparaison de la charge mesurée sur chaque essieu par rapport à la charge maximum autorisée par essieu. Ainsi, un capteur de pression disposé au niveau de l'essieu, mesurant la charge à l'essieu peut être interfacé avec l'unité de contrôle commande électronique (10), et provoquer de façon automatique une descente de l'essieu relevable si cette pression est supérieure à un seuil prédéterminé correspondant à la charge maximale autorisée.

Conformément à l'invention, les modules électropneumatiques (13-16) peuvent également alimenter d'autres organes généralement appelés "auxiliaires", et fonctionnant grâce à l'énergie de l'air comprimé. Il peut ainsi s'agir de dispositifs généralement appelés "servitudes" et qui fonctionnent avec des dispositifs spécifiques qui requièrent une alimentation avec une pression et un débit prédéterminés. On peut citer par exemple les systèmes d'assistance présents au niveau des boîtes de vitesse.

Il peut également s'agir de prises de mouvement ou de prises de force, correspondant à une sortie mécanique, généralement prise sur la boîte de vitesse ou directement sur le moteur. Le mouvement de rotation peut par exemple être converti en puissance hydraulique, de manière à alimenter des vérins hydrauliques d'un système de benne, de grue ou équivalents.

Parmi les dispositifs auxiliaires on peut également citer les systèmes de blocage de différentiel. Ainsi, une sortie d'un module électropneumatique peut agir sur un actionneur qui agit lui-même sur un organe automatique au niveau du différentiel considéré, qui peut être un différentiel inter-roues, inter-ponts, ou bien encore la boîte de transfert.

Plus généralement, tout système du véhicule utilisant habituellement l'énergie pneumatique (hormis le freinage de service), comme par exemples les trompes pneumatiques d'avertisseur ou certains équipements carrossiers, peut être concerné par cette invention.

L'utilisation de l'unité de contrôle commande électronique (10) centralisée au niveau du dispositif de traitement d'air (1) conforme à l'invention, assure une gestion automatisée de ces différentes fonctionnalités auxiliaires. On peut par exemple citer la fonction d'anti-patinage qui peut nécessiter un blocage automatique du différentiel et qui par un interfaçage approprié via le bus de communication informatique, permet de remplir cette fonction de façon très simple grâce à l'invention.

Il ressort de ce qui précède que le dispositif de traitement d'air conforme à l'invention présente de multiples avantages, et notamment :
- une amélioration de la fiabilité ainsi qu'une diminution des fuites d'air, par la réduction du nombre des composants et des connexions pneumatiques utilisés dans la mise en oeuvre de l'énergie pneumatique ;
- une amélioration de la sécurité, liée aux possibilités de diagnostic et de gestion des modes dégradés du circuit pneumatique ;
- une amélioration des possibilités de gestion des fonctions auxiliaires grâce à l'utilisation d'une unité de contrôle commande centralisée au niveau du dispositif de traitement d'air ;
- une réduction du coût du système grâce à l'architecture modulaire du dispositif de traitement d'air ;
- une facilité d'évolution et d'adaptation de ce système à une différente gamme de véhicules

## Revendications

1. Dispositif de traitement d'air comprimé (1) destiné à être installé dans un véhicule industriel, comportant un véhicule moteur apte à tracter une remorque, incluant :
• une entrée d'air (3) en provenance d'une source d'air comprimé (7);
• au moins une sortie d'air (4), reliée à un réservoir destiné à l'alimentation du système de frein de service ;
• un ensemble de composants électropneumatiques (37) assurant la distribution d'air comprimé en provenance de la source d'air comprimé à destination du ou des réservoirs ;
• une unité de contrôle commande électronique (10), apte à commander ledit ensemble de composants électropneumatiques (37), l'unité de contrôle commande étant reliée à un bus de communication informatique (30), ainsi qu'à divers composants électriques tels que capteurs ou contacteurs,
**caractérisé en ce qu'**il comporte également :
· une sortie d'air supplémentaire (26), alimentant directement le ou les actionneurs du système de frein de parc du véhicule moteur ;
· un ensemble supplémentaire de composants électropneumatiques (27) associés à la sortie d'air supplémentaire (26) ;
· des moyens de commande, intégrés à l'unité de contrôle commande électronique (10), aptes à commander l'ensemble supplémentaire de composants électropneumatiques (27), en fonction d'informations issues du bus de communication informatique (30) et/ou de divers composants électriques.

2. Dispositif selon la revendication 1, **caractérisé en ce que** la sortie d'air supplémentaire et l'ensemble de composants électropneumatiques associés, sont disposés dans un élément (16) rapporté sur le corps (2) du dispositif.

3. Dispositif selon la revendication 1, **caractérisé en ce qu'**il comprend également :
- au moins une sortie d'air supplémentaire, destinée à l'alimentation du ou des actionneurs du système de suspension pneumatique d'un essieu ;
- un ensemble supplémentaire d'organes électropneumatiques, associé à la ou les sorties d'air supplémentaire ;
- des moyens de commande intégrées dans l'unité de contrôle commande électronique, aptes à commander l'ensemble supplémentaire d'organes électropneumatiques en fonction d'informations issues du bus de communication informatique et/ou de divers composants électriques.

4. Dispositif selon la revendication 3, **caractérisé en ce que** la ou les sorties d'air supplémentaires destinées à l'alimentation du système de suspension pneumatique, et l'ensemble d'organes électropneumatiques associés, sont rassemblés dans un ou plusieurs éléments (13-16) rapportés sur le corps du dispositif.

5. Dispositif selon la revendication 4, **caractérisé en ce que** les sorties d'air destinées à l'alimentation du système de suspension pneumatique attachées à un essieu sont rassemblées dans un même élément flasqué sur le corps du dispositif.

6. Dispositif selon la revendication 3, **caractérisé en ce que** l'unité de contrôle commande électronique (10)est interfacée avec un ou plusieurs capteurs d'altitude (34), mesurant la différence de hauteur entre le châssis du véhicule et un ou plusieurs points de l'essieu considéré.

7. Dispositif selon la revendication 1, **caractérisé en ce qu'**il comporte également :
- au moins une sortie d'air complémentaire, destinée à l'alimentation du ou des actionneurs pneumatiques, d'un système auxiliaire tel que notamment un système de blocage de différentiel, un système de prise de mouvements,
- un ensemble complémentaire d'organes électropneumatiques associé à la ou les sorties d'air complémentaires,
- des moyens de commande intégrés dans l'unité de contrôle commande électronique, aptes à commander l'ensemble complémentaire d'organes électropneumatiques, en fonction d'informations issues notamment du bus de communication informatique.

8. Dispositif selon la revendication 1, **caractérisé en ce qu'**il comporte également des moyens pour assurer une désbumidification de l'air en provenance de la source d'air comprimé.

9. Dispositif selon la revendication 8, **caractérisé en ce que** les moyens pour assurer la dèshunùdification de l'air comportent une cartouche (5) amovible par rapport au corps (2) du dispositif.

10. Dispositif selon la revendication 2, **caractérisé en ce qu'**il comporte également un ou plusieurs éléments supplémentaires (17, 18) rapportés sur le corps (2) du dispositif, chaque élément présentant un ou plusieurs contacts électriques aptes à être incorporés dans un circuit de commande électrique, lesdits contacts étant commandés par l'unité de contrôle commande (10), en fonction d'informations issues du bus de communication informatique et/ou de divers composants électriques.

## Patentansprüche

1. Druckluftverarbeitungsvorrichtung (1), die dazu bestimmt ist, eingebaut zu werden in ein Nutzfahrzeug mit einem Motorfahrzeug, das in der Lage ist, einen Anhänger zu ziehen, umfassend:
• einen Einlass (3) für Luft, die aus einer Druckluftquelle (7) stammt;
• mindestens einen Luftauslass (4), der mit einem Reservoir verbunden ist, das zur Speisung der Betriebsbremsanlage bestimmt ist;
• eine Einheit elektropneumatischer Bauteile (37), welche die Verteilung der aus der Druckluftquelle stammenden und für das oder die Reservoirs bestimmten Luft sichert;
• eine elektronische Kontroll- und Steuereinheit (10), die in der Lage ist, die Einheit elektropneumatischer Bauteile (37) zu steuern, wobei die Kontroll- und Steuereinheit mit einer Vielfachleitung zur IT-Kommunikation (30) sowie mit verschiedenen elektrischen Bauteilen wie Messfühlern oder Einschaltern verbunden ist,
**dadurch gekennzeichnet, dass** sie außerdem umfasst:
- einen zusätzlichen Luftauslass (26), der direkt das oder die Betätigungsorgane der Parkbremsanlage des Motorfahrzeugs speist;
- eine zusätzliche Einheit elektropneumatischer Bauteile (27), die mit dem zusätzlichen Luftauslass (26) verbunden sind;
- in die elektronische Kontroll- und Steuereinheit (10) integrierte Steuermittel, die in der Lage sind, die zusätzliche Einheit elektropneumatischer Bauteile (27) in Abhängigkeit von Informationen zu steuern, die von der Vielfachleitung zur IT-Kommunikation (30) und/oder verschiedenen elektrischen Bauteilen stammen.

2. Vorrichtung nach Anspruch 1, **dadurch gekennzeichnet, dass** der zusätzliche Luftauslass und die Einheit zugeordneter elektropneumatischer Bauteile in einem Element (16) angeordnet sind, das an den Körper (2) der Vorrichtung angesetzt ist.

3. Vorrichtung nach Anspruch 1, **dadurch gekennzeichnet, dass** sie außerdem umfasst:
- mindestens einen zusätzlichen Luftauslass, der zur Speisung des oder der Betätigungsorgane des pneumatischen Aufhängungssystems einer Achse bestimmt ist;
- eine zusätzliche Einheit elektropneumatischer Organe, die dem oder den zusätzlichen Luftauslässen zugeordnet ist;
- in die elektronische Kontroll- und Steuereinheit integrierte Steuermittel, die in der Lage sind, die zusätzliche Einheit elektropneumatischer Organe in Abhängigkeit von Informationen zu steuern, die von der Vielfachleitung zur IT-Kommunikation und/oder verschiedenen elektrischen Bauteilen stammen.

4. Vorrichtung nach Anspruch 3, **dadurch gekennzeichnet, dass** der oder die zusätzlichen Luftauslässe, die zur Speisung des pneumatischen Aufhängungssystems bestimmt sind, und die Einheit zugeordneter elektropneumatischer Organe in einem oder mehreren Elementen (13-16) zusammengefasst sind, das an den Körper der Vorrichtung angesetzt ist.

5. Vorrichtung nach Anspruch 4, **dadurch gekennzeichnet, dass** die zur Speisung des pneumatischen Aufhängungssystems bestimmten, mit einer Achse verbundenen Luftauslässe in ein und demselben Element zusammengefasst sind, das an den Körper der Vorrichtung angeflanscht ist.

6. Vorrichtung nach Anspruch 3, **dadurch gekennzeichnet, dass** die elektronische Kontroll- und Steuereinheit (10) eine Schnittstelle mit einem oder mehreren Messfühlern für die Höhe (34) aufweist, die den Höhenunterschied zwischen dem Fahrgestell des Fahrzeugs und einem oder mehreren Punkten der betreffenden Achse messen.

7. Vorrichtung nach Anspruch 1, **dadurch gekennzeichnet, dass** sie außerdem umfasst:
- mindestens einen zusätzlichen Luftauslass, der zur Speisung des oder der pneumatischen Betätigungsorgane eines Nebensystems wie insbesondere eines Differentialsperrsystems oder eines Antriebssystems bestimmt ist;
- eine zusätzliche Einheit elektropneumatischer Organe, die dem oder den zusätzlichen Luftauslässen zugeordnet ist;
- in die elektronische Kontroll- und Steuereinheit integrierte Steuermittel, die in der Lage sind, die zusätzliche Einheit elektropneumatischer Organe in Abhängigkeit von Informationen zu steuern, die insbesondere von der Vielfachleitung zur IT-Kommunikation stammen.

8. Vorrichtung nach Anspruch 1, **dadurch gekennzeichnet, dass** sie außerdem Mittel umfasst, die für eine Entfeuchtung der aus der Druckluftquelle stammenden Luft sorgen.

9. Vorrichtung nach Anspruch 8, **dadurch gekennzeichnet, dass** die Mittel, die für die Entfeuchtung der Luft sorgen, eine Patrone (5) umfassen, die in Bezug auf den Körper (2) der Vorrichtung abnehmbar ist.

10. Vorrichtung nach Anspruch 2, **dadurch gekennzeichnet, dass** sie außerdem ein oder mehrere zusätzliche Elemente (17, 18) umfasst, die an den Körper (2) der Vorrichtung angesetzt sind, wobei jedes Element einen oder mehrere elektrische Kontakte aufweist, die in der Lage sind, in einen elektrischen Steuerkreis integriert zu werden, wobei die Kontakte durch die Kontroll- und Steuereinheit (10) in Abhängigkeit von Informationen gesteuert werden, die von der Vielfachleitung zur IT-Kommunikation und/oder verschiedenen elektrischen Bauteilen stammen.

## Claims

1. A device (1) for treating compressed air, intended to be installed in an industrial vehicle, comprising a motor vehicle able to haul a trailer, including:
• an air inlet (3) for air coming from a compressed-air source (7);
• at least one air outlet (4) connected to a reservoir intended to supply the service brake system;
• a set of electropneumatic components (37) distributing compressed air from the compressed-air source bound for the reservoir or reservoirs;
• an electronic command and control unit (10), able to operate said set of electropneumatic components (37), the command and control unit being connected to a computer communication bus (30) and to various electrical components such as sensors or contact switches,
**characterized in that** it also comprises:
· a supplementary air outlet (26) intended to supply the actuator or actuators of the motor vehicle parking brake system;
· a supplementary set of electropneumatic components (27) which are associated with the supplementary air outlet (26);
· operating means incorporated into the electronic command and control unit (10), able to operate the supplementary set of electropneumatic components (27) on the basis of information originating from the computer communication bus (30) and/or from various electrical components.

2. The device as claimed in claim 1, **characterized in that** the supplementary air outlet and the set of associated electropneumatic components, are arranged in an element (16) attached to the body (2) of the device.

3. The device as claimed in claim 1, **characterized in that** it also comprises:
- at least one supplementary air outlet intended to supply the actuator or actuators of the pneumatic suspension system of one axle;
- an additional set of electropneumatic members, which is associated with the supplementary air outlet or outlets;
- operating means incorporated into the electronic command and control unit and able to operate the additional set of electropneumatic members on the basis of information originating from the computer communication bus and/or various electrical components.

4. The device as claimed in claim 3, **characterized in that** the supplementary air outlet or outlets intended to supply the pneumatic suspension system, and the set of associated electropneumatic members, are gathered together into one or more elements (13-16) attached to the body of the device.

5. The device as claimed in claim 4, **characterized in that** the air outlets intended for supplying the pneumatic suspension system which are attached to an axle are grouped together into one and the same element attached by flanges to the body of the device.

6. The device as claimed in claim 3, **characterized in that** the electronic command and control unit (10) is interfaced with one or several altitude sensors (34) measuring the difference in height between the chassis of the vehicle and one or several points of the axle concerned.

7. The device as claimed in claim 1, **characterized in that** it also comprises:
- at least one complementary air outlet intended to supply the pneumatic actuator or actuators of an auxiliary system such as, in particular, a differential lock system, a movement take-off system,
- a complementary set of electropneumatic members which is associated with the complementary air outlet or air outlets,
- operating means incorporated into the electronic command and control unit able to operate the complementary set of electropneumatic members on the basis of information originating in particular from the computer communication bus.

8. The device as claimed in claim 1, **characterized in that** it also comprises means for dehumidifying the air originating from the compressed-air source.

9. The device as claimed in claim 8, **characterized in that** the means for dehumidifying the air comprise a cartridge (5) that can be removed from the body (2) of the device.

10. The device as claimed in claim 2, **characterized in that** it also comprises one or several supplementary elements (17, 18) attached to the body (2) of the device, each element having one or several electrical contacts able to be incorporated into an electric control circuit, said contacts being operated by the command and control unit (10) on the basis of information from the computer communication bus and/or various electrical components.
